(19) **Europäisches Patentamt / European Patent Office / Office européen des brevets**

(11) **EP 4 394 946 B1**

(12) **EUROPEAN PATENT SPECIFICATION**

(45) Date of publication and mention
of the grant of the patent:
**10.06.2026 Bulletin 2026/24**

(21) Application number: **22955198.1**

(22) Date of filing: **16.11.2022**

(51) International Patent Classification (IPC):
$H01M\ 4/583^{(2010.01)}$  $H01M\ 4/02^{(2006.01)}$
$C01B\ 32/20^{(2017.01)}$  $H01M\ 4/587^{(2010.01)}$
$H01M\ 4/36^{(2006.01)}$  $H01M\ 10/0525^{(2010.01)}$
$H01M\ 4/133^{(2010.01)}$

(52) Cooperative Patent Classification (CPC):
**H01M 4/02; C01B 32/20; H01M 4/133; H01M 4/36;
H01M 4/364; H01M 4/366; H01M 4/583;
H01M 4/587; H01M 10/0525;** H01M 2004/021;
H01M 2004/027; Y02E 60/10

(86) International application number:
**PCT/CN2022/132157**

(87) International publication number:
**WO 2024/103273 (23.05.2024 Gazette 2024/21)**

(54) **ANODE MATERIAL AND BATTERY**

ANODENMATERIAL UND BATTERIE

MATÉRIAU D'ANODE ET BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**03.07.2024 Bulletin 2024/27**

(60) Divisional application:
**26165296.0**

(73) Proprietors:
• **Kaifeng Ruifeng New Material Co., Ltd.
Kaifeng, Henan 475231 (CN)**
• **BTR NEW MATERIAL GROUP CO., LTD.
Shenzhen, Guangdong 518106 (CN)**

(72) Inventors:
• **HUANG, Jian
Kaifeng, Henan 475231 (CN)**

• **ZHANG, Baoxuan
Kaifeng, Henan 475231 (CN)**
• **LIU, Ruoqi
Kaifeng, Henan 475231 (CN)**
• **YANG, Shuzhan
Kaifeng, Henan 475231 (CN)**
• **REN, Jianguo
Kaifeng, Henan 475231 (CN)**

(74) Representative: **advotec.
Patent- und Rechtsanwaltspartnerschaft mbB
Widenmayerstraße 4
80538 München (DE)**

(56) References cited:
**EP-A1- 4 049 971        WO-A1-2022/052994
CN-B- 109 830 669        JP-A- 2014 067 680
JP-A- 2014 067 680        JP-A- 2019 046 925**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present disclosure relates to the technical field of anode material, and in particular to an anode material and a battery.

**BACKGROUND**

Graphite has become a popular anode material of commercial lithium ion battery due to its advantages of high electronic conductivity, large lithium ion diffusion coefficient, small volume change in a layered structure before and after lithium intercalation, high lithium intercalation capacity, and low lithium intercalation potential.

A traditional graphitizing device for graphite anode mainly includes two main types, i.e. a crucible furnace and a box furnace, which both are intermittent working. Continuous production cannot be achieved due to the fact that the graphitization process needs to be powered off. Additionally, due to the limited characteristics of the temperature rising and cooling process of the device, i.e. the rates of temperature rising and falling are slow, resulting in a long production period. Usually, the graphitizing period ranges from 15 to 50 days. In the process of graphitization production, volatile components, impurity elements and the like in the raw material escape at high temperature, thereby forming pores inside and/or on the surface of graphite. Generally, artificial graphite has a certain number of pore structures. On the one hand, the presence of pores can increase diffusion channel of $Li^+$ in the graphite material, and reduce diffusion resistance of $Li^+$, thereby effectively improving rate performance of the material. On the other hand, too many pore structures will result in an increase of specific surface area of the material, thereby resulting in a degradation of initial efficiency and cycling performance of the product. In fact, the rate performance cannot be optimized by simply improving the pore structure, there is still a lot can be improved. Most researchers have focused on exploring impact of a single factor on the performance of graphite material, without developing a research deeply in terms of synergism of various factors to maximize the improvement of rate performance of graphite.

Therefore, at the present stage where the graphite material has been more developed, the mere improvement of single parameter cannot meet the requirements of the market for low-cost and high-performance graphite material. It is necessary to explore action mechanism of multiple factors synergistically to develop a graphite anode material meeting the market requirements.

JP 2014 067680 A discloses an anode material used for a secondary battery, characterized in that the anode material comprises (artificial) graphite particles and amorphous carbon wherein the mass ratio of amorphous carbon in the anode material is 1:0.001 or more and interior pores and/or on surface of the graphite. The specific surface area (S) is 1.5 $m^2/g$ or more and 5 $m^2/g$ or less, the DBP oil absorption value (O) is 43 ml/100 g or more and 76 ml/100 g or less, and the total pore volume (V) is 0.52 ml/g measured by mercury intrusion technique.

SUMMARY

In view of this, the present disclosure provides an anode material and a battery, where an active site and a diffusion channel for lithium ion de-intercalation in the anode material are improved, and high rate charge-discharge performance of the anode material is improved.

In a first aspect, the present disclosure provides an anode material, including artificial graphite, and there are pores inside and/or on surface of the artificial graphite. The anode material has an oil absorption value of O mL/100g, a pore volume of V and a specific surface area of S $m^2/g$, where $400 < O*V*S \leq 1500$,

The pore volume is obtained by calculation in a pore size range of 17Å to 3000Å using a BJH Desorption cumulative volume of pores model, by testing by ASAP2460 equipment of American Micromeritics.

In some embodiments, the anode material has an oil absorption value of O mL/100g, where $43 \leq O \leq 60$.

In some embodiments, the anode material has a pore volume of V $cm^3/kg$, where $5 \leq V \leq 8$.

In some embodiments, the anode material has a specific surface area of S $m^2/g$, where $1.78 \leq S \leq 3.0$.

In some embodiments, the anode material has a particle size satisfying following relationship equation: $0.9 \leq (D90 - D10)/D50 \leq 1.8$, and $10 \ \mu m \leq D50 \leq 30 \ \mu m$.

In some embodiments, the anode material further includes an amorphous carbon.

In some embodiments, the anode material further includes amorphous carbon, and a mass ratio of the amorphous carbon in the anode material is 0.1 wt% to 5 wt%.

In some embodiments, the anode material has an intensity ratio $I_D/I_G$ of peak intensity $I_D$ at 1300 $cm^{-1}$ to 1400 $cm^{-1}$ and peak intensity $I_G$ at 1580 $cm^{-1}$ to 1620 $cm^{-1}$ determined by Raman spectroscopy, where $0.03 < I_D/I_G \leq 0.10$.

In some embodiments, the anode material includes an artificial graphite primary particle and/or an artificial graphite secondary particle.

In some embodiments, the pore includes at least one of micro-pore and meso-pore.

In a second aspect, the present disclosure provides a battery, including the artificial graphite anode material according to the first aspect.

The technical solution of the present disclosure has at least the following beneficial effects:

Those skilled in the art know that the artificial graphite has a certain range of pore volume which increase diffusion channel of Li$^+$, and a certain range of specific surface area which ensure a sufficient electrochemical reaction interface, thus promoting diffusion of lithium ions at solid-liquid interface and in solid phase, reducing concentration polarization, and facilitating improvement of capacity and rate performance of the anode material. On this basis, the applicant has found through deep research that only meeting adequate pore volume and specific surface area may not effectively improve the rate performance. Because lithium ion de-intercalation not only needs a diffusion channel and a reaction interface, but also requires an electrolyte as a medium. While some pores cannot be infiltrated by electrolyte due to influence of surface morphology or other factors, thus fails to play their role. Hence the corresponding surfaces cannot conduct an electrochemical reaction voluntarily, which can be considered as insufficiency of "effective electrochemical reaction extent". The infiltration capacity of the electrolyte is usually reflected by the oil absorption value. The present disclosure develops a lot of experimental exploration depending on the combination of pore volume, specific surface area, and oil absorption value. The O * V * S of the anode material is controlled within the above range, indicating that there is sufficient reaction extent for effective lithium ion de-intercalation in the anode material, which facilitates to improving high rate charge-discharge performance of artificial graphite anode material.

The anode material provided by the present disclosure is produced through a continuous graphitization process, with continuous feeding and discharging. All materials pass through the same path and time, and the time and temperature passing through high temperature zone are consistent. In graphitization process, by controlling heating rate or cooling rate of calcination and graphitization stages, volatile components, impurity elements, and other substances in the material are allowed to escape uniformly and quickly. At the same time, a certain amount of additive is introduced, so as to achieve accurate control of pore volume inside and/or on surface of the graphite. Through synergistic use of the above processes, the relationship equation of the specific surface area, the oil absorption value and the pore volume can be accurately controlled to satisfy $400 \leq O * V * S \leq 1500$.

The anode material provided by the present disclosure has low energy consumption per unit mass, obvious advantages in cost and production period, and is environment friendly.

## BRIEF DESCRIPTION OF DRAWINGS

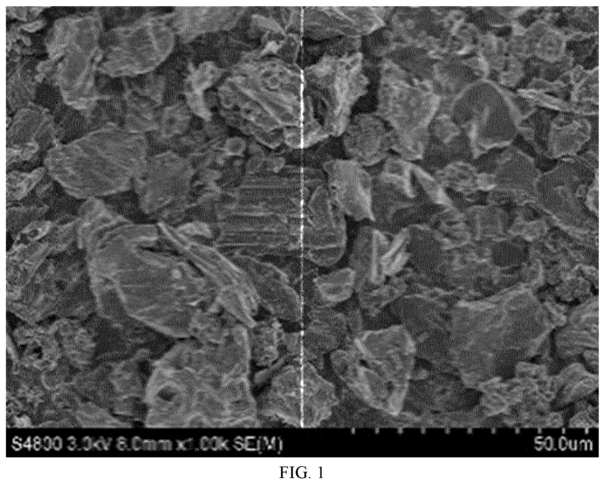

FIG. 1 is a scanning electron microscope image of an artificial graphite anode material provided by Example 12 of the present disclosure.

## DESCRIPTION OF EMBODIMENTS

In order to better illustrate the present disclosure and facilitate the understanding of technical solutions of the present disclosure, the present disclosure will be further described in detail below. However, the following examples are merely simple examples of the present disclosure and are not intended to represent or limit the scope of protection of the present disclosure.

In a field of an anode material, development of a continuous graphitization device has been continuing for decades. As early as 1987, a patent (US06619591) discloses a device capable of continuously graphitizing a carbon-containing material. In recent years, the applicant has also continuously developed the continuous graphitization device. For example, the patent granted in 2019 (CN211425033U) discloses a vertical kiln for producing continuously lithium ion battery anode material, which can realize continuous discharging from a discharging port and meanwhile continuous feeding from a material pipeline. Compared with a traditional graphitizing process, the continuous graphitizing process has a shortened graphitizing time from several days to several hours, resulting in an obvious reduction in energy consumption. However, the graphitizing time is greatly shortened, leading to changes in microstructure of artificial graphite produced by the continuous graphitizing process, especially in internal pore structure and crystal form of the artificial graphite, compared with a conventional artificial graphite. For a long time, it has been verified in this field that these changes are difficult to meet performance requirements of artificial graphite, and it is difficult to be improved. Therefore, even though the continuous graphitization device has existed for three to four decades, artificial graphite anode product produced by continuous graphitizing still has no prior example of successful mass production.

In recent years, as energy resource becomes more scarce, the applicant has been consistently developing application of the continuous graphitization device for further reducing cost of the artificial graphite. The objective is to develop an artificial graphite anode material with performance equivalent to or even better than a conventional graphitizing anode material, so as to reduce energy consumption of the artificial graphite anode material, and further reduce costs. The applicant has developed various means through lots of preparation processes to improve the adverse changes of rapid temperature rise and fall on artificial a graphite product. After selecting the product, a series of different types of artificial graphite anode materials are obtained. Although microstructures of these artificial graphite anode materials are different from that of conventional artificial graphite product, their electrical performances can be basically equivalent to that of the conventional artificial graphite product, and even their electrical performances in some aspects and processing performance are more excellent or stable, which already have an ability for replacing the conventional artificial graphite product.

Hereinafter, one of preparation processes developed by the applicant is taken as an example to further describe the preparation process and related products in detail.

A preparation method of an anode material, including following steps:

S10, calcining green coke at a temperature of 500°C to 1200°C for 3 h to 6 h, and natural cooling, to obtain low calcined coke, where a heating rate of the calcining is 2°C/min to 10°C/min.;

S20, shaping the low calcined coke to obtain a coke powder with a median particle size of 10 $\mu$m to 20 $\mu$m;

S30, press-molding a mixture of the coke powder, a binder, an additive, and a solvent under a pressure of 5 Mpa to 100 Mpa to obtain a precursor, where a mass ratio of the coke powder and the additive is 100:(1 to 5); and

S40, placing the precursor in a continuous graphitizing furnace and heating up to 2800°C to 3200°C at a heating rate of 12°C/min to 20°C/min, remaining at 2800°C to 3200°C for 2 h to 5 h, and cooling to 30°C at a cooling rate of 15°C/min to 25°C/min, to obtain the anode material.

According to the preparation method of an anode material provided by the present disclosure, the low calcined coke obtained by calcination of green coke is crushed into the coke powder. The heating rate in the low-temperature calcination stage is low, which facilitates slow escape of volatile components and to control formation process of pore structure in early stage. The mixture of the coke powder, the binder, the additive and the solvent is press-molded, and the precursor is directly placed in a continuous graphitization furnace. By an extremely fast heating rate, the precursor can reach graphitization temperature in a short period of time. The additive rapidly volatilizes and escapes, further forming pores inside and/or on surface of the graphite particle. The existence of the pores facilitate to improvement of specific surface area and oil absorption value, increasing reactive area of anode active material in an electrode, and facilitating improvement of high rate charge-discharge performance of the material. In addition, the process of the materials entering and exiting the continuous graphitization furnace is completed within a few hours, resulting a high thermal energy utilization rate, which can reduce production costs.

In some embodiments, the green coke, as raw material, includes at least one of petroleum coke, needle coke, pitch coke, and isotropic coke.

In some embodiments, the heating rate of the calcining can specifically be 2°C/min, 3°C/min, 5°C/min, 6°C/min, 8°C/min, 9°C/min, or 10°C/min, etc. It can be understood that the heating rate of the calcining is within the above range, which facilitates slow escape of volatile components in raw material for preliminary formation of pore structures, which can be combined with rapid heating of subsequent graphitization process to obtain an anode material satisfying $400 \leq O * V * S \leq 1500$.

In some embodiments, the temperature of the calcining can be specifically 500°C, 550°C, 600°C, 700°C, 750°C, 800°C, 850°C, 900°C, 1000°C, or 1200°C, etc., but is not limited to the recited values, and other unrecited values within the range are also valid. It can be understood that the temperature of the calcining is within the above range, which facilitates discharge of volatile components and the like in the green coke raw material.

In some embodiments, a holding time of the calcining can specifically be 3 h, 4 h, 4.5 h, 5 h, 5.5 h, or 6 h, etc., but is not limited to the recited values, and other unrecited values within the range are also valid. Preferably, the holding time of the calcining is 3 h to 4 h.

In some embodiments, the shaping includes at least one of crushing, spheroidizing, or grading.

A median particle size of shaped coke powder is 10 $\mu$m to 20 $\mu$m, and more specifically can be 12 $\mu$m, 13 $\mu$m, 14 $\mu$m, 16 $\mu$m, 18 $\mu$m, 18.5 $\mu$m, 19 $\mu$m, or 20 $\mu$m, etc., but is not limited to the recited values, and other unrecited values within the range are also valid. It is found through many tests that the median particle size of the coke powder is controlled within the above range, which facilitates all of the processability, capacity, and rate performance.

In some embodiments, a mass content of carbon in the coke powder is $\geq 80\%$, which can be 80%, 81%, 82%, 85%, 90%, 95%, or 96%, etc., but is not limited to the recited values, and other unrecited values within the range are also valid.

In some embodiments, the solvent includes at least one of water, ethanol, acetone, benzene, toluene, quinoline, tetrahydrofuran, and carbon tetrachloride.

In some embodiments, the binder includes at least one of heavy oil, mineral oil, coal tar, pitch, petroleum resin, phenolic resin, epoxy resin, coumarone resin, potato starch, wheat starch, corn starch, sweet potato starch, Pueraria powder, and tapioca starch. The pitch can be at least one of petroleum-based liquid pitch and coal-based liquid pitch. Specifically, the petroleum-based liquid pitch can be petroleum asphalt, modified asphalt, mesophase asphalt, and the like.

In some embodiments, the additive includes one of boron oxide, boron carbide, boron nitride, silicon carbide, boron carbide, boron nitride, boric acid, boron chloride, and sodium borate. On the one hand, the additive serves as a graphitization catalyst, and on the other hand, it volatilizes rapidly during the graphitization process, which facilitates formation of stable pores inside and/or on surface of the artificial graphite.

In some embodiments, a mass ratio of the coke powder, the binder, the solvent, and the additive is 100:(3 to 20):(5 to 50):(1 to 5), which specifically can be 100:3:5:1, 100:10:15:1, 100:15:20:5, 100:20:20:1, 100:20:15:3, 100:10:10:5, or 100:15:25:2, etc., but is not limited to the recited values, and other unrecited values within the range are also valid. An amount of the additive is controlled within the above range, which facilitates catalyzing the graphitization process, and on the other hand, can form a certain number of pores inside graphite.

In some embodiments, a manner for mixing the mixture includes at least one of mechanical stirring and ultrasonic dispersion. When mechanical stirring is adopted for mixing, a rotary slurry stirrer, a turbine stirrer, a flat slurry stirrer and the like can be adopted, as long as each components in the mixture are fully and uniformly mixed.

In some embodiments, a stirring rate is 10 r/min to 1000 r/min, which specifically can be 10 r/min, 50 r/min, 70 r/min, 100 r/min, 120 r/min, 150 r/min, 200 r/min, 300 r/min, 350 r/min, 400 r/min, 500 r/min, or 1000 r/min, etc., which is not limited herein. The stirring rate is controlled within the above range, which facilitates mixing of each components to form a uniform mixture.

The stirring can be carried out at normal temperature or in a preheating state. Preferably, a stirring temperature can be controlled at 25°C to 200°C. It can be understood that a proper preheating facilitates mixing of each components to form a uniform mixture.

In some embodiments, the press-molding includes at least one of extrusion, molding, rolling, and isostatic pressing.

In some embodiments, a pressure of the press-molding specifically can be 5 MPa, 15 MPa, 25 MPa, 30 MPa, 35 MPa, 40 MPa, 45 MPa, 50 MPa, 55 MPa, 60 MPa, 70 MPa, 80 MPa, 90 MPa, or 100 MPa, etc. By the press-molding, on the one hand, fluidity of materials in the graphitization process can be improved, and on the other hand, furnace loading amount and production capacity of materials can be also improved.

In some embodiments, a holding temperature of graphitization specifically can be 2800°C, 2900°C, 3000°C, 3100°C, 3150°C, 3180°C, or 3200°C, etc., but is not limited to the recited values, and other unrecited values within the range are also valid.

In some embodiments, a holding time of graphitization specifically can be 2 h, 2.5 h, 3 h, 3.5 h, 3.8 h, 4 h, 4.5 h, or 5 h, etc., but is not limited to the recited values, and other unrecited values within the range are also valid. Preferably, the holding time of graphitization is 2 h to 3 h.

In some embodiments, a heating rate of graphitization specifically can be 12°C/min, 13°C/min, 14°C/min, 16°C/min, 18°C/min, 18.5°C/min, or 20°C/min, etc., but is not limited to the recited numerical values, and other numerical values not recited within the range are also valid. Rapid heating facilitates formation of pores inside and/or on surface of material graphite and control of the specific surface area.

In some embodiments, a cooling rate after graphitization is 15°C/min to 25°C/min, specifically can be 15°C/min, 16°C/min, 17°C/min, 18°C/min, 20°C/min, 21°C/min, 22°C/min, 23°C/min, 24°C/min, or 25°C/min, etc., but is not limited to the recited values, and other unrecited values within the range are also valid. Rapid cooling facilitates control of the specific surface area and the oil absorption value of the material, while greatly shortening cycle of the graphitization process and reducing production costs.

In some embodiments, after graphitization, at least one of crushing, sieving and demagnetizing is further performed. Preferably, after carbonization, crushing, demagnetizing and sieving are performed in sequence.

In some embodiments, a manner of the crushing is any one of a mechanical crusher, an airflow crusher, and a low-temperature crusher.

In some embodiments, a manner of the sieving is any one of a fixed screen, a drum screen, a resonance screen, a roller screen, a vibrating screen, and a chain screen. A mesh of the sieving is 100 meshes to 500 meshes, and specifically can be 100 meshes, 200 meshes, 250 meshes, 325 meshes, 400 meshes, and 500 meshes, etc. A particle size of the anode material is controlled within the above range, which facilitates improvement of processing performance of the anode material.

In some embodiments, a device of the demagnetizing is any one of a permanent magnet drum magnetic separator, an electromagnetic iron remover, and a pulsating high gradient magnetic separator. The demagnetizing is to control final content of magnetic substance in the anode material, avoiding the magnetic substance from discharge effect of lithium ion battery and safety of battery during use.

An anode material, including artificial graphite, and there are pores inside and/or on surface of the artificial graphite. The anode material has an oil absorption value of O mL/100g, a pore volume of V cm$^3$/kg, and a specific surface area of S m$^2$/g, where $400 < O*V*S \leq 1500$, and the pore volume is obtained by calculation in a pore size range of 17Å to 3000Å using a BJH Desorption cumulative volume of pores model, by testing by ASAP2460 equipment of American Micromeritics.

The anode material provided by the present disclosure is produced through a continuous graphitization process. The material is firstly rapidly heated from a low temperature for calcination, and then rapidly heated from a high temperature for graphitization. At the same time, a certain amount of additive is added into raw material for precise control of pores inside and/or on surface of the graphite, so that the pore volume, specific surface area, and oil absorption value of the material arrive desirable control and design requirements.

Those skilled in the art know that the artificial graphite has a certain range of pore volume which increase diffusion channel of $Li^+$, and a certain range of specific surface area which ensure a sufficient electrochemical reaction interface, thus promoting diffusion of lithium ions at solid-liquid interface and in solid phase, reducing concentration polarization, and facilitating improvement of capacity and rate performance of the anode material. On this basis, the applicant has found through deep research that only meeting adequate pore volume and specific surface area may not effectively improve the rate performance. Because lithium ion de-intercalation not only needs a diffusion channel and a reaction interface, but also requires an electrolyte as a medium. While some pores cannot be infiltrated by electrolyte due to influence of surface morphology or other factors, thus fails to play their role. Hence the corresponding surfaces cannot conduct an electrochemical reaction voluntarily, which can be considered as insufficiency of "effective electrochemical reaction extent". The infiltration capacity of the electrolyte is usually reflected by the oil absorption value. The present disclosure develops a lot of experimental exploration depending on the combination of pore volume, specific surface area, and oil absorption value. The $O * V * S$ of the anode material is controlled within the above range, indicating that there is sufficient reaction extent for effective lithium ion de-intercalation in the anode material, which facilitates to improving high rate charge-discharge performance of artificial graphite anode material.

In some embodiments, the oil absorption value of the anode material is O mL/100g, where $43 \leq O < 60$. Specifically, it can be 43, 44, 45, 47, 49, 51, 52, 53, 54, 55, 57, 59, or 60, etc., which is not limited herein. The oil absorption value of the material is controlled within the above range, which facilitates improving adsorption and infiltration performance of the material to electrolyte, and electrochemical performance of the anode material is better.

In some embodiments, the pore volume of the anode material is V $cm^3/kg$, where $5 \leq V \leq 8$. Specifically, it can be 5.1, 5.2, 5.5, 5.8, 6.0, 6.2, 6.5, 6.8, 7.0, 7.2, 7.5, or 8.0, etc., which is not limited herein. When an electrochemical reaction occurs at pores inside electrode, the pores bring more lithium ion diffusion channels and electrochemical reaction interfaces for the anode material, promoting diffusion of lithium ions at solid-liquid interface and in solid phase, reducing concentration polarization, and facilitating improvement of rate performance of the anode material..

In some embodiments, the specific surface area of the anode material is S $m^2/g$, where $1.78 \leq S \leq 3.0$. Specifically, it can be 1.79, 1.85, 1.95, 2.00, 2.25, 2.43, 2.57, 2.61, 2.72, 2.85, 2.90, or 3.0, which is not limited herein. It can be understood that an excessively large specific surface area tends to form a solid electrolyte membrane, and consumes too much irreversible lithium salt, resulting reduction of initial efficiency of battery.

In some embodiments, the pore includes at least one of micro-pore and meso-pore.

In some embodiments, a particle size $D_{50}$ of the anode material is 10 $\mu m$ to 30 $\mu m$, specifically can be 10 $\mu m$, 11 $\mu m$, 12 $\mu m$, 13 $\mu m$, 14 $\mu m$, 15 $\mu m$, 20 $\mu m$, 25 $\mu m$, or 30 $\mu m$, etc, which is not limited herein.

In some embodiments, the particle size of the anode material satisfies following relationship equation: $0.9 \leq (D90 - D10)/D50 \leq 1.8$, specifically can be 0.9, 1.0, 1.1, 1.2, 1.3, 1.4, 1.5, 1.6, 1.7, or 1.8, etc, which is not limited herein. The particle size of the anode material satisfies the above relationship, which can ensure that the anode material has a relatively concentrated particle size distribution and a proper bulk density.

It should be noted that, a volume reference cumulative particle size distribution is obtained by particle size distribution measured by laser diffraction. $D_{10}$ represents a particle size corresponding to the cumulative particle size distribution percentage of powder reaching 10%. $D_{50}$ represents a particle size corresponding to the cumulative particle size distribution percentage reaching 50%, and $D_{90}$ represents a particle size corresponding to the cumulative particle size distribution percentage reaching 90%.

In some embodiments, the anode material further includes an amorphous carbon.

In some embodiments, the anode material further includes an amorphous carbon, and a mass ratio of the amorphous carbon in the anode material is 0.1 wt% to 5 wt%, and a mass ratio of the amorphous carbon in the anode material specifically can be 0.1 wt%, 0.3 wt%, 0.5 wt%, 1 wt%, 2 wt%, 3 wt%, 4 wt%, or 5 wt%. The presence of the amorphous carbon provides more irregular and more opened diffusion paths for lithium ion, which facilitates improvement of rate performance of the material.

In some embodiments, the anode material has an intensity ratio $I_D/I_G$ of peak intensity $I_D$ at 1300 $cm^{-1}$ to 1400 $cm^{-1}$ and peak intensity $I_G$ at 1580 $cm^{-1}$ to 1620 $cm^{-1}$ determined by Raman spectroscopy, where $0.03 \leq I_D/I_G \leq 0.10$, and specifically it can be 0.03, 0.04, 0.05, 0.06, 0.07, 0.08, 0.09, or 0.1, etc., which is not limited herein. The intensity ratio $I_D/I_G$ of the anode material is controlled within the above range, which improves graphitization degree of the anode material, thus crystal quality of the graphite is better.

In some embodiments, the anode material includes an artificial graphite primary particle and/or an artificial graphite secondary particle.

In some embodiments, the pore includes at least one of micro-pore and meso-pore.

In some embodiments, the anode material has a specific capacity of 320 mAh/g to 370 mAh/g, which specifically can be 320 mAh/g, 340 mAh/g, 342 mAh/g, 345 mAh/g, 353 mAh/g, 355 mAh/g, 357 mAh/g, 360 mAh/g, 365 mAh/g, or 370 mAh/g, etc., which is not limited herein.

A battery, including the above anode material.

Those skilled in the art will understand that the preparation method of the battery described above is only an embodiment. Other methods commonly used in the art can also be used without departing from the content disclosed in the present disclosure, and other types of battery can also be prepared for testing, such as sodium ion battery and potassium ion battery.

The present disclosure is further described below through several examples. The embodiments of the present disclosure are not limited to the following specific examples.

Example 1

The preparation method of composite anode material of this example, including following steps:

(1) Daqing petroleum coke was calcined at a temperature of 800°C for 4 h, and cooled to obtain low calcined coke, where a heating rate of the calcining was 5°C/min;
(2) the low calcined coke was crushed and shaped by a shaping device to obtain a crushed and shaped coke powder with a median particle size of 15 μm;
(3) the coke powder was uniformly mixed with coal tar, quinolone, and silicon carbide in a mass ratio of 100:5:15:2 to obtain a mixture;
(4) the mixture was press-molded under 20 MPa pressure to obtain a precursor;
(5) the precursor was graphitized at 3000°C by a continuous graphitizing furnace to obtain a graphitized product, where temperature rise curve was as follows: the temperature was increased to 3000°C at a heating rate of 16.5°C/min, held at 3000°C for 3 h, and then cooled to 30°C at a cooling rate of 16.0°C/min;
(6) the graphitized product was scattered, demagnetized and sieved in 250 mesh to obtain the artificial graphite anode material.

The above anode material includes primary particle artificial graphite and secondary particle artificial graphite, and most of which is primary particle artificial graphite.

Example 2

The preparation method of composite anode material of this example, including following steps:

(1) Baosteel pitch coke was calcined at a temperature of 750°C for 4 h, and cooled to obtain low calcined coke, where a heating rate of the calcining was 3°C/min
(2) the low calcined coke was crushed and shaped by a shaping device to obtain a crushed and shaped coke powder with a median particle size of 15 μm;
(3) the coke powder was uniformly mixed with starch, water, and sodium borate in a mass ratio of 100:6:20:2 to obtain a mixture A;
(4) the mixture was press-molded under 20 MPa pressure to obtain a precursor;
(5) the precursor was graphitized at 2950°C by a continuous graphitizing furnace to obtain a graphitized product, where temperature rise curve was as follows: the temperature was increased to 2950°C at a heating rate of 15°C/min, held at 2950°C for 3 h, and then cooled to 30°C at a cooling rate of 20°C/min;
(6) the graphitized product was scattered, demagnetized and sieved in 250 mesh to obtain the artificial graphite anode material.

The above anode material includes primary particle artificial graphite and secondary particle artificial graphite, and most of which is primary particle artificial graphite.

Example 3

The preparation method of composite anode material of this example, including following steps:

(1) Daqing petroleum coke was calcined at a temperature of 800°C for 4 h, and cooled to obtain low calcined coke, where a heating rate of the calcining was 6°C/min;
(2) the low calcined coke was crushed and shaped by a shaping device to obtain a crushed and shaped coke powder with a median particle size of 15 μm;

(3) the coke powder was uniformly mixed with coal tar, quinolone, and boron nitride in a mass ratio of 100:5:15:3 to obtain a mixture A;

(4) the mixture was press-molded under 20 MPa pressure to obtain a precursor;

(5) the precursor was graphitized at 2900°C by a continuous graphitizing furnace to obtain a graphitized product, where temperature rise curve was as follows: the temperature was increased to 2900°C at a heating rate of 18°C/min, held at 2900°C for 3 h, and then cooled to 30°C at a cooling rate of 21.5°C/min;

(6) the graphitized product was scattered, demagnetized and sieved in 250 mesh to obtain the artificial graphite anode material.

The above anode material includes primary particle artificial graphite and secondary particle artificial graphite, and most of which is primary particle artificial graphite.

Example 4

The preparation method of composite anode material of this example, including following steps:

(1) Daqing petroleum coke was calcined at a temperature of 800°C for 4 h, and cooled to obtain low calcined coke, where a heating rate of the calcining was 5°C/min;

(2) the low calcined coke was crushed and shaped by a shaping device to obtain a crushed and shaped coke powder with a median particle size of 15 μm;

(3) the coke powder was uniformly mixed with starch, water, and boron carbide in a mass ratio of 100:6:20:2 to obtain a mixture A;

(4) the mixture was press-molded under 20 MPa pressure to obtain a precursor;

(5) the precursor was graphitized at 3000°C by a continuous graphitizing furnace to obtain a graphitized product, where temperature rise curve was as follows: the temperature was increased to 3000°C at a heating rate of 20°C/min, held at 3000°C for 3 h, and then cooled to 30°C at a cooling rate of 16.6°C/min;

(6) the graphitized product was scattered, demagnetized and sieved in 250 mesh to obtain the artificial graphite anode material.

The above anode material includes primary particle artificial graphite and secondary particle artificial graphite, and most of which is primary particle artificial graphite.

Example 5

This example was conducted as Example 1 excepting that: the temperature for calcining in step (1) was 500°C.

The above anode material includes primary particle artificial graphite and secondary particle artificial graphite, and most of which is primary particle artificial graphite.

Example 6

This example was conducted as Example 1 excepting that: the temperature for calcining in step (1) was 1200°C.

The above anode material includes primary particle artificial graphite and secondary particle artificial graphite, and most of which is primary particle artificial graphite.

Example 7

This example was conducted as Example 1 excepting that: the time for calcining in step (1) was 3 h.

The above anode material includes primary particle artificial graphite and secondary particle artificial graphite, and most of which is primary particle artificial graphite.

Example 8

This example was conducted as Example 1 excepting that: the time for calcining in step (1) was 6 h.

The above anode material includes primary particle artificial graphite and secondary particle artificial graphite, and most of which is primary particle artificial graphite.

Example 9

This example was conducted as Example 1 excepting that: in step (3), the coke powder was uniformly mixed with coal tar, quinoline, and silicon carbide in a mass ratio of 100:3:15:2 to obtain a mixture.

The above anode material includes primary particle artificial graphite and secondary particle artificial graphite, and most of which is primary particle artificial graphite.

Example 10

This example was conducted as Example 1 excepting that: in step (3), the coke powder was mixed uniformly with coal tar, quinoline, and silicon carbide in a mass ratio of 100:20:15:2 to obtain a mixture.

The above anode material includes primary particle artificial graphite and secondary particle artificial graphite, and most of which is secondary particle artificial graphite.

Example 11

This example was conducted as Example 1 excepting that: in step (3), the coke powder was mixed uniformly with coal tar, quinoline, and silicon carbide in a mass ratio of 100:5:5:2 to obtain a mixture.

The above anode material includes primary particle artificial graphite and secondary particle artificial graphite, and most of which is primary particle artificial graphite.

Example 12

This example was conducted as Example 1 excepting that: in step (3), the coke powder was mixed uniformly with coal tar, quinoline, and silicon carbide in a mass ratio of 100:5:50:2 to obtain a mixture.

The electron micrograph of the above anode material was shown in FIG. 1, from which it can be seen that the anode material was composed of primary particles and secondary particles.

Example 13

This example was conducted as Example 1 excepting that: in step (3), the coke powder was mixed uniformly with coal tar, quinoline, and silicon carbide in a mass ratio of 100:5:15:1 to obtain a mixture.

The above anode material includes primary particle artificial graphite and secondary particle artificial graphite, and most of which is primary particle artificial graphite.

Example 14

This example was conducted as Example 1 excepting that: in step (3), the coke powder was mixed uniformly with coal tar, quinoline, and silicon carbide in a mass ratio of 100:5:15:5 to obtain a mixture.

The above anode material includes primary particle artificial graphite and secondary particle artificial graphite, and most of which is primary particle artificial graphite.

Example 15

This example was conducted as Example 1 excepting that: a pressure for press-molding in step (4) was 5 MPa.

The above anode material includes primary particle artificial graphite and secondary particle artificial graphite, and most of which is primary particle artificial graphite.

Example 16

This example was conducted as Example 1 excepting that: a pressure for press-molding in step (4) was 100 MPa.

The above anode material includes primary particle artificial graphite and secondary particle artificial graphite, and most of which is primary particle artificial graphite.

Example 17

This example was conducted as Example 1 excepting that: a temperature for graphitizing in step (5) was 2800°C.

The above anode material includes primary particle artificial graphite and secondary particle artificial graphite, and most of which is primary particle artificial graphite.

Example 18

This example was conducted as Example 1 excepting that: a temperature for graphitizing in step (5) was 3200°C.
The above anode material includes primary particle artificial graphite and secondary particle artificial graphite, and most of which is primary particle artificial graphite.

Example 19

This example was conducted as Example 1 excepting that: a holding time for graphitizing in step (5) was 2 h.
The above anode material includes primary particle artificial graphite and secondary particle artificial graphite, and most of which is primary particle artificial graphite.

Example 20

This example was conducted as Example 1 excepting that: a holding time for graphitizing in step (5) was 5 h.
The above anode material includes primary particle artificial graphite and secondary particle artificial graphite, and most of which is primary particle artificial graphite.

Comparative Example 1

This example was conducted as Example 1 excepting that: the precursor obtained in step (4) was loaded into a graphite crucible, and then the graphite crucible was transferred into an Acheson furnace and underwent a high-temperature graphitization process to obtain an anode material. The graphitization process was conducted at a maximum temperature of 2900°C for a holding time of 3 h, with a heating rate of 0.6°C/min and a cooling rate of 0. 1°C/min.

Comparative Example 2

Daqing petroleum coke was crushed and shaped by a shaping device to obtain a crushed and shaped coke powder with a median particle size of 15 $\mu$m; the coke powder was loaded into an Acheson furnace and underwent a high-temperature graphitization process to obtain an anode material. The graphitization process was conducted at a maximum temperature of 2900°C for a holding time of 8 h, with a heating rate of 0.7°C/min and a cooling rate of 0.1°C/min.

Comparative Example 3

Daqing petroleum coke was calcined at a temperature of 800°C for 4 h with a heating rate of the calcining of 1.5°C/min, and then loaded into a continuous graphitization furnace, where temperature rise curve was as follows: the temperature was increased to 2900°C at a heating rate of 8°C/min, held at 2900°C for 3 h, and then cooled to 30°C at a cooling rate of 10°C/min. The discharged product was crushed and shaped for a median particle size of 15 $\mu$m, to obtain the anode material.

Test Methods

(1) Test method for particle size of anode material:
A particle size distribution range of the composite anode material was tested by a Malvern laser particle size meter.
(2) Test method for pore volume of anode material:
The pore volume V was obtained by calculation in a pore size range of 17Å to 3000Å using a BJH Desorption cumulative volume of pores model, by testing by ASAP2460 equipment of American Micromeritics.
(3) Test method for specific surface area of anode material:
A dynamic specific surface area rapid tester JW-DX purchased from Beijing JWGB Sci & Tech Ltd was adopted for testing, with a unit of $m^2/g$.
(4) Test method for surface morphology of anode material:
A Hitachi S4800 scanning electron microscope was adopted for observing surface morphology of anode material particles.
(5) Test method for oil absorption value of anode material:

<p>

An ASAHI S-500 oil absorption value tester purchased from Japan ASAHISOUKEN was adopted for testing, and the oil absorption value O was an amount of flaxseed oil dropped when a torque generated by change in viscosity characteristics reach 70% of maximum torque, with a unit of mL/100g.

(6) Test method for $I_D$ / $I_G$ of anode material:

The ratio $I_D/I_G$ of peak intensity $I_D$ at 1300 $cm^{-1}$ to 1400 $cm^{-1}$ and peak intensity $I_G$ at 1580 $cm^{-1}$ to 1620 $cm^{-1}$ of the anode material was tested by Raman spectroscopy.

(7) Test method for performance of battery:

The anode materials prepared by Examples 1 to 22 and Comparative Examples 1 to 3, carboxymethyl cellulose, conductive carbon black, and styrene-butadiene rubber in a mass ratio of 95: 1.5:1.5:2 were magnetically stirred in deionized water for 8 h, to be uniformly mixed. The mixed slurry was coated on copper foil and dried under vacuum at 60°C for a working electrode. Metal lithium was used as a counter electrode and a reference electrode. Celgard2325 was used as separator. 1 mol•L-1 LiPF6-EC (ethylene carbonate) / DMC (dimethyl carbonate) / EMC (ethyl methyl carbonate) (volume ratio was 1:1:1) was used as electrolyte. A CR2016 button battery was assembled in a glove box filled with high-purity argon.

Teat of initial discharge capacity / initial discharge efficiency was performed on LAND battery tester, with charging and discharging conditions as follows: stood for 2 h; discharged: 0.1C to 0.005V, 0.09C, 0.08C... 0.02C to 0.001V; stood for 15 min; charged: 0.1C to 1.5V; stood for 15 min.

A button half-battery was tested for rate performance at 25±2°C to obtain charge and discharge specific capacities and coulombic efficiencies of 0.2C, 1C, and 2C. Charging and discharging conditions of rate test of button battery were as follows: (i) discharged at 0.1C to 0.01V, at constant voltage for 5 h, charged at 0.1C to 1.5V; (ii) discharged at 0.2C to 0.01V, at constant voltage to 0.01C, charged at 0.2C to 1.5V; (iii) discharged at 0.2C to 0.01V, at constant voltage to 0.01C, charged at 2C to 1.5V; (iv) discharged at 0.2C to 0.01V, at constant voltage to 0.01C, charged at 0.2C to 1.5V; (v) discharged at 1C to 0.01V, at constant voltage to 0.01C; charged at 0.2C to 1.5V; (vi) discharged at 2C to 0.01V.

Full battery test: the anode material prepared by each example was used as an anode active material. The anode active material, a conductive agent, a binder, and a dispersant in a mass percentage of 95.2:1.5:2:1.3 were dissolved in deionized water for mixing, controlled solid content to be 50 wt%, then coated on a copper foil current collector with a thickness of 8 $\mu$m and dried in vacuum, to prepare an anode pole piece. Lithium iron phosphate, polyvinylidene fluoride, and a conductive agent carbon black in a mass ratio of 95:2:3 were uniformly mixed with a solvent NMP (N-methylpyrrolidone), then coated on an aluminum foil with a thickness of 16 $\mu$m and dried in vacuum, to prepare a cathode pole piece. The coated cathode pole piece and the coated anode pole piece were subjected to procedures of flaking, winding, drying, liquid injecting, sealing, formation, and capacity grading, to prepare a 554065-type soft package lithium ion battery.

The obtained soft package battery was test by charging and discharging on LAND cell test system purchased from Wuhan Jinnuo Electronics Co., Ltd. at room temperature, charging and discharging at a current of 1C/1C. The charge and discharge voltage was controlled to 3.0V to 4.35V. Initial efficiency and capacity retention rate after 500 cycles were tested (a compaction density of the anode pole piece was 1.60 $g/cm^3$).

Performance test results of the anode materials obtained by the above examples are shown in Table 1 below, and performance test results of the battery made by the anode materials are shown in Table 2 below:
</p>

Table 1. Performance Comparison Results of Anode Materials

| Sample | Pore Volume V ($cm^3/kg$) | Specific Surface Area S ($m^2/g$) | Oil Absorption Value O (mL/100g) | O*V*S | D10 ($\mu$m) | D50 ($\mu$m) | D90 ($\mu$m) | $(D_{90}-D_{10})/D_{SO}$ | $I_D/I_G$ | Graphitization Energy Consumption (kwh/ton) |
|---|---|---|---|---|---|---|---|---|---|---|
| S1 | 6.65 | 3.15 | 57.5 | 1204.5 | 8.0 | 15.7 | 29.8 | 1.39 | 0.066 | 2500 |
| S2 | 6.90 | 2.78 | 57.8 | 1108.7 | 8.7 | 16.1 | 27.9 | 1.19 | 0.054 | 2600 |
| S3 | 6.71 | 2.60 | 64.2 | 1120.0 | 7.8 | 15.2 | 30.0 | 1.46 | 0.038 | 2500 |
| S4 | 8.42 | 2.30 | 50.1 | 970.2 | 7.6 | 14.9 | 30.4 | 1.53 | 0.039 | 2500 |
| S5 | 6.60 | 2.55 | 54.5 | 917.2 | 8.1 | 15.6 | 28.5 | 1.31 | 0.074 | 2700 |
| S6 | 6.54 | 2.50 | 52.1 | 884.5 | 9.2 | 15.2 | 28.5 | 1.27 | 0.059 | 2600 |
| S7 | 6.45 | 2.48 | 53.5 | 855.8 | 8.6 | 15.7 | 29.3 | 1.32 | 0.074 | 2600 |
| S8 | 6.31 | 2.41 | 54.7 | 801.4 | 8.2 | 15.7 | 28.3 | 1.28 | 0.053 | 2600 |
| S9 | 6.25 | 2.38 | 51.9 | 772.0 | 8.4 | 16.0 | 28.4 | 1.25 | 0.051 | 2600 |

**EP 4 394 946 B1**

(continued)

| Sample | Pore Volume V (cm³/kg) | Specific Surface Area S (m²/g) | Oil Absorption Value O (mL/100g) | O*V*S | D10 (μm) | D50 (μm) | D90 (μm) | $(D_{90}-D_{10})/D_{SO}$ | $I_D/I_G$ | Graphitization Energy Consumption (kwh/ton) |
|---|---|---|---|---|---|---|---|---|---|---|
| S10 | 6.81 | 2.22 | 49.3 | 745.3 | 10.2 | 17.6 | 28.1 | 1.02 | 0.086 | 2600 |
| S11 | 6.37 | 2.37 | 48.5 | 732.2 | 7.8 | 15.1 | 32.3 | 1.62 | 0.061 | 2500 |
| S12 | 6.73 | 2.25 | 45.0 | 681.4 | 8.2 | 15.5 | 32.5 | 1.57 | 0.064 | 2600 |
| S13 | 6.48 | 2.17 | 47.3 | 665.1 | 7.4 | 14.6 | 32.6 | 1.73 | 0.065 | 2600 |
| S14 | 5.25 | 2.04 | 59.8 | 640.5 | 8.3 | 15.3 | 30.5 | 1.45 | 0.072 | 2600 |
| S15 | 5.62 | 2.07 | 47.8 | 556.1 | 7.9 | 14.5 | 31.7 | 1.64 | 0.069 | 2600 |
| S16 | 5.51 | 1.99 | 46.5 | 509.9 | 9.4 | 16.8 | 25.7 | 0.97 | 0.72 | 2600 |
| S17 | 5.72 | 1.84 | 43.3 | 455.7 | 8.7 | 15.7 | 28.9 | 1.29 | 0.092 | 2400 |
| S18 | 5.56 | 1.83 | 43.7 | 444.6 | 8.5 | 15.3 | 30.4 | 1.43 | 0.052 | 2600 |
| S19 | 5.56 | 1.79 | 43.1 | 428.9 | 8.2 | 14.9 | 28.2 | 1.34 | 0.084 | 2400 |
| S20 | 5.13 | 1.79 | 43.7 | 401.3 | 7.9 | 15.6 | 29.9 | 1.41 | 0.057 | 2700 |
| D1 | 7.56 | 3.01 | 66.3 | 1508.7 | 8.2 | 15.7 | 28.9 | 1.32 | 0.13 | 13000 |
| D2 | 2.22 | 0.68 | 27.90 | 42.1 | 7.8 | 14.2 | 33.5 | 1.81 | 0.071 | 14500 |
| D3 | 5.10 | 1.78 | 43.2 | 392.2 | 8.4 | 15.2 | 32.1 | 1.56 | 0.068 | 2600 |

Table 2. Performance Comparison Results of Batteries

| Sample | Specific Capacity (mAh/g) | Initial Cycle Coulombic Efficiency (%) | Capacity Retention at 1C/0.2C (%) | Capacity Retention at 2C/0.2C (%) | Capacity Retention after 500 cycles (%) |
|---|---|---|---|---|---|
| S1 | 346.4 | 94.1 | 60.9 | 20.2 | 90.6 |
| S2 | 348.1 | 94.5 | 62.1 | 21.5 | 91.5 |
| S3 | 346.2 | 94.3 | 60.4 | 19.2 | 90.9 |
| S4 | 345.2 | 94.3 | 60.2 | 18.8 | 90.7 |
| S5 | 347.7 | 94.5 | 61.8 | 21.5 | 92.2 |
| S6 | 348.1 | 94.5 | 61.6 | 21.4 | 91.1 |
| S7 | 347.9 | 94.4 | 62.0 | 21.9 | 92.4 |
| S8 | 347.5 | 94.6 | 61.2 | 21.1 | 91.2 |
| S9 | 346.8 | 94.4 | 61.4 | 21.6 | 91.4 |
| S10 | 347.1 | 94.3 | 62.5 | 21.9 | 91.3 |
| S11 | 347.2 | 94.5 | 61.6 | 21.5 | 91.3 |
| S12 | 347.3 | 94.4 | 61.3 | 21.4 | 91.2 |
| S13 | 348.2 | 94.4 | 61.7 | 21.5 | 91.5 |
| S14 | 347.5 | 94.5 | 61.5 | 21.5 | 91.4 |
| S15 | 348.4 | 94.6 | 61.4 | 21.7 | 91.2 |
| S16 | 347.3 | 94.3 | 61.6 | 21.4 | 90.9 |
| S17 | 347.5 | 94.3 | 62.2 | 22.0 | 91.3 |
| S18 | 347.4 | 94.6 | 61.2 | 21.1 | 91.2 |
| S19 | 348.4 | 94.3 | 62.3 | 22.1 | 91.9 |

(continued)

| Sample | Specific Capacity (mAh/g) | Initial Cycle Coulombic Efficiency (%) | Capacity Retention at 1C/0.2C (%) | Capacity Retention at 2C/0.2C (%) | Capacity Retention after 500 cycles (%) |
|---|---|---|---|---|---|
| S20 | 347.3 | 94.5 | 61.5 | 21.3 | 91.2 |
| D1 | 338.6 | 90.5 | 57.8 | 18.2 | 89.6 |
| D2 | 342.3 | 93.8 | 56.9 | 17.7 | 87.5 |
| D3 | 343.5 | 93.0 | 55.5 | 17.2 | 85.4 |

From the test data of Examples 1 to 20, it can be seen that there are pores formed inside and/or on surface of the graphite prepared by examples of the present disclosure, and high rate charge-discharge performance of the materials are significantly improved. This is because when the anode materials are made into electrodes and applied in lithium ion batteries, effective electrochemical reaction extent inside the materials are sufficient after injecting electrolyte, which facilitates to improve rate performance of the anode material.

For the anode material prepared by Comparative Example 1, its oil absorption value O is excessively large, and O * V * S deviates from the above range, resulting in poor rate and cycling performance of the material.

For the anode material prepared by Comparative Example 2, pores in the artificial graphite are not rich enough, and pore volume V is excessively small, O * V * S deviates from the above range, thus there are not sufficient diffusion channels for lithium ion, which does not facilitate to improve rate performance of the anode material.

For the anode material prepared by Comparative Example 3, the heating rates for calcining and graphitization in the preparation process deviate from the optimization ranges of the preparation method of the present disclosure, so that O * V * S deviates from the above range, resulting in poorer capacity and rate performance compared to that of Example 1 with the same process conditions.

## Claims

1. An anode material, **characterized in that** the anode material comprises artificial graphite, and there are pores inside and/or on surface of the artificial graphite, and the anode material has an oil absorption value of O mL/100g, a pore volume of V cm$^3$/kg, and a specific surface area of S m$^2$/g, wherein $400 \leq O*V*S \leq 1500$,
   wherein the oil absorption value is tested by an oil absorption value tester, which is an amount of flaxseed oil dropped when a torque generated by change in viscosity characteristics reach 70% of maximum torque; the pore volume is obtained by calculation in a pore size range of 17Å to 3000Å using a BJH Desorption cumulative volume of pores model, and the specific surface area is tested by a dynamic specific surface area rapid tester JW-DX.

2. The anode material according to claim 1, **characterized in that** the anode material has an oil absorption value of O mL/100g, wherein $43 \leq O \leq 60$.

3. The anode material according to claim 1, **characterized in that** the anode material has a pore volume of V cm$^3$/kg, wherein $5 \leq V \leq 8$.

4. The anode material according to claim 1, **characterized in that** the anode material has a specific surface area of S m$^2$/g, wherein $1.78 \leq S \leq 3.0$.

5. The anode material according to claim 1, **characterized in that** the anode material has a particle size satisfying following relationship equation: $0.9 \leq (D90 - D10)/D50 \leq 1.8$, and $10 \mu m \leq D50 \leq 30 \mu m$.

6. The anode material according to any one of claims 1 to 5, **characterized in that** the anode material satisfies at least one of the following features:

   (1) the anode material further comprises amorphous carbon; and
   (2) the anode material further comprises amorphous carbon, and a mass ratio of the amorphous carbon in the anode material is 0.1wt% to 5wt%.

7. The anode material according to any one of claims 1 to 5, **characterized in that** the anode material has an intensity ratio $I_D/I_G$ of peak intensity $I_D$ at 1300 cm$^{-1}$ to 1400 cm$^{-1}$ and peak intensity $I_G$ at 1580 cm$^{-1}$ to 1620 cm$^{-1}$ determined by Raman spectroscopy, wherein $0.03 \leq I_D/I_G \leq 0.10$.

8.  The anode material according to any one of claims 1 to 5, **characterized in that** the anode material comprises an artificial graphite primary particle and/or an artificial graphite secondary particle.

9.  The anode material according to any one of claims 1 to 5, **characterized in that** the pore comprises at least one of micro-pore and meso-pore.

10. A battery, **characterized in that** the battery comprises the anode material according to any one of claims 1 to 9.


**Patentansprüche**

1.  Anodenmaterial, **dadurch gekennzeichnet, dass** das Anodenmaterial künstliches Graphit umfasst und dass Poren innerhalb und/oder an der Oberfläche des künstlichen Graphits sind und dass das Anodenmaterial einen Ölabsorptionswert von O mL/100g, ein Porenvolumen von V cm$^3$/kg und eine spezifische Oberfläche von S m$^2$/g aufweist, wobei

$$400 \leq O*V*S \leq 1500,$$

wobei der Ölabsorptionswert, welcher eine Menge an Leinsamenöl ist, die herabgetropft ist, wenn ein durch Änderung der Viskositätseigenschaften erzeugtes Drehmoment 70 % des maximalen Drehmoments erreicht, mit einer Ölabsorptionswertprüfvorrichtung getestet wird; wobei das Porenvolumen unter Verwendung eines BJH-Modells für das kumulative Porenvolumen bei der Desorption durch Berechnung in einem Porengrößenbereich von 17 Å bis 3000 Å erhalten wird, und wobei die spezifische Oberfläche mit einer dynamischen Schnellprüfvorrichtung für spezifische Oberflächen JW-DX getestet wird.

2.  Anodenmaterial nach Anspruch 1, **dadurch gekennzeichnet, dass** das Anodenmaterial einen Ölabsorptionswert von O mL/100g aufweist, wobei

$$43 \leq O \leq 60.$$

3.  Anodenmaterial nach Anspruch 1, **dadurch gekennzeichnet, dass** das Anodenmaterial ein Porenvolumen von V cm$^3$/kg aufweist, wobei

$$5 \leq V \leq 8.$$

4.  Anodenmaterial nach Anspruch 1, **dadurch gekennzeichnet, dass** das Anodenmaterial eine spezifische Oberfläche von S m$^2$/g aufweist, wobei

$$1{,}78 \leq S \leq 3{,}0.$$

5.  Anodenmaterial nach Anspruch 1, **dadurch gekennzeichnet, dass** das Anodenmaterial eine Partikelgröße aufweist, die folgende Verhältnisgleichung erfüllt: $0{,}9 \leq (D90 - D10)/D50 \leq 1{,}8$, und

$$10 \ \mu m \leq D50 \leq 30 \ \mu m.$$

6.  Anodenmaterial nach einem der Ansprüche 1 bis 5, **dadurch gekennzeichnet, dass** das Anodenmaterial mindestens eines der folgenden Merkmale erfüllt:

    (1) das Anodenmaterial umfasst des Weiteren amorphen Kohlenstoff; und
    (2) das Anodenmaterial umfasst des Weiteren amorphen Kohlenstoff, und ein Massenanteil des amorphen Kohlenstoffs in dem Anodenmaterial beträgt 0,1 Gew.-% bis 5 Gew.-%.

7. Anodenmaterial nach einem der Ansprüche 1 bis 5, **dadurch gekennzeichnet, dass** das Anodenmaterial ein durch die Raman-Spektroskopie bestimmtes Intensitätsverhältnis $I_D/I_G$ der Spitzenintensität $I_D$ bei 1300 cm$^{-1}$ bis 1400 cm$^{-1}$ und der Spitzenintensität $I_G$ bei 1580 cm$^{-1}$ bis 1620 cm$^{-1}$ aufweist, wobei $0,03 \leq I_D/I_G \leq 0,10$.

8. Anodenmaterial nach einem der Ansprüche 1 bis 5, **dadurch gekennzeichnet, dass** das Anodenmaterial ein Primärpartikel künstlichen Graphits und/oder ein Sekundärpartikel künstlichen Graphits umfasst.

9. Anodenmaterial nach einem der Ansprüche 1 bis 5, **dadurch gekennzeichnet, dass** die Pore eine Mikropore und/oder eine Mesopore umfasst.

10. Batterie, **dadurch gekennzeichnet, dass** die Batterie das Anodenmaterial nach einem der Ansprüche 1 bis 9 umfasst.

## Revendications

1. Matériau d'anode, **caractérisé en ce que** le matériau d'anode comprend du graphite artificiel et **en ce qu'**il y a des pores dans et/ou sur la surface du graphite artificiel et **en ce que** le matériau d'anode a une valeur d'absorption d'huile d'O mL/100g, un volume poreux de V cm$^3$/kg, et une surface spécifique de S m$^2$/g, dans lequel $400 \leq O*V*S \leq 1500$, dans lequel la valeur d'absorption d'huile est testée par un testeur de valeurs d'absorption d'huile, ladite valeur d'absorption d'huile étant une quantité d'huile de graines de lin dégouttée lorsqu'un couple généré par une modification dans les caractéristiques de viscosité atteint 70 % du couple maximal ; dans lequel le volume poreux est obtenu par un calcul dans une plage de tailles de pores de 17 Å à 3000 Å en utilisant un modèle BJH pour le volume cumulatif des pores lors de la désorption, et dans lequel la surface spécifique est testée par un testeur rapide JW-DX dynamique de surfaces spécifiques.

2. Matériau d'anode selon la revendication 1, **caractérisé en ce que** le matériau d'anode a une valeur d'absorption d'huile d'O mL/100g, dans lequel $43 \leq O \leq 60$.

3. Matériau d'anode selon la revendication 1, **caractérisé en ce que** le matériau d'anode a un volume poreux de V cm$^3$/kg, dans lequel $5 \leq V \leq 8$.

4. Matériau d'anode selon la revendication 1, **caractérisé en ce que** le matériau d'anode a une surface spécifique de S m$^2$/g, dans lequel

$$1,78 \leq S \leq 3,0.$$

5. Matériau d'anode selon la revendication 1, **caractérisé en ce que** le matériau d'anode a une taille de particules qui satisfait l'équation de relation suivante : $0,9 \leq (D90 - D10)/D50 \leq 1,8$, et $10 \ \mu m \leq D50 \leq 30 \ \mu m$.

6. Matériau d'anode selon l'une quelconque des revendications 1 à 5, **caractérisé en ce que** le matériau d'anode satisfait au moins une des caractéristiques suivantes :

   (1) le matériau d'anode comprend en outre du carbone amorphe ; et
   (2) le matériau d'anode comprend en outre du carbone amorphe, et un pourcentage massique du carbone amorphe dans le matériau d'anode est de 0,1 % en poids à 5 % en poids.

7. Matériau d'anode selon l'une quelconque des revendications 1 à 5, **caractérisé en ce que** le matériau d'anode a un rapport d'intensité $I_D/I_G$ de l'intensité maximale $I_D$ à 1300 cm$^{-1}$ à 1400 cm$^{-1}$ et de l'intensité maximale $I_G$ à 1580 cm$^{-1}$ à 1620 cm$^{-1}$ déterminé par une spectroscopie Raman, dans lequel $0,03 \leq I_D/I_G \leq 0,10$.

8. Matériau d'anode selon l'une quelconque des revendications 1 à 5, **caractérisé en ce que** le matériau d'anode comprend une particule primaire de graphite artificiel et/ou une particule secondaire de graphite artificiel.

**9.** Matériau d'anode selon l'une quelconque des revendications 1 à 5,
**caractérisé en ce que** le pore comprend au moins un parmi un micropore et un mésopore.

**10.** Pile, **caractérisée en ce que** la pile comprend le matériau d'anode selon l'une quelconque des revendications 1 à 9.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014067680 A
- US 06619591 B
- CN 211425033 U